(19) Europäisches Patentamt
European Patent Office
Office européen des brevets

(11) EP 3 279 613 A1

(12) EUROPEAN PATENT APPLICATION

(43) Date of publication:
07.02.2018 Bulletin 2018/06

(51) Int Cl.:
G01D 5/22 (2006.01)  G01D 5/244 (2006.01)

(21) Application number: 17181323.1

(22) Date of filing: 13.07.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 02.08.2016 US 201615226549

(71) Applicant: Honeywell International Inc.
Morris Plains, NJ 07950 (US)

(72) Inventors:
• SLOAT, Jef
Morris Plains, NJ 07950 (US)
• RACHLIN, Elliott
Morris Plains, NJ 07950 (US)
• GRIFFITH, Scot
Morris Plains, NJ 07950 (US)

(74) Representative: Houghton, Mark Phillip
Patent Outsourcing Limited
1 King Street
Bakewell, Derbyshire DE45 1DZ (GB)

(54) SYSTEM AND METHOD FOR DETERMINING A POSITION OF A MOVEABLE DEVICE

(57) A systems and method for determining a position of a moveable device is provided. The system, for example, may include, but is not limited to a variable displacement transformer, an sine wave source electrically connected to the variable displacement transformer, and a processor electrically coupled to the variable displacement transformer, the processor configured to calculate Fourier Transform components by multiplying voltages output by the variable displacement transformer by predetermined values and storing the results in a memory, determining, when a predetermined number of samples have been calculated, a sum of the values in the buffer, and determining the position of the movable device based upon the sum of the values of the buffer.

FIG. 1

**Description**

TECHNICAL FIELD

The present disclosure generally relates to a control system, and more particularly relates to determining a position of a moveable device within a system.

BACKGROUND

Complex systems, such as aircraft, automobiles, spacecraft or other complex machinery include numerous parts which move. Aircraft, for example, have rudders, flaps, valves, landing gear, and numerous other parts which move. The position of the moveable parts within the complex system often needs to be known for the accurate operation of the complex system.

Accordingly, it is desirable to provide improved systems and methods for determining a position of a moveable device, which more accurately and efficiently determines the position. Furthermore, other desirable features and characteristics of the present invention will become apparent from the subsequent detailed description and the appended claims, taken in conjunction with the accompanying drawings and the foregoing technical field and background

BRIEF SUMMARY

In one embodiment, for example, a system for determining a position of a moveable device is provided. The system may include, but is not limited to, a variable displacement transformer, including but is not limited to, a shaft mechanically coupled to the moveable device, a primary coil arranged on a first side of the shaft, a first secondary coil arranged on a second side of the shaft, and a second secondary coil arranged on the second side of the shaft, a digital to analog converter electrically connected to the primary coil of the variable displacement transformer, the digital to analog converter configured to provide a sine wave signal to the primary coil of the variable displacement transformer having a predetermined frequency and a predetermined amplitude, and a processor electrically coupled to the first secondary coil and the second secondary coil, the processor configured to calculate, for each sample corresponding to a voltage induced by the primary coil onto the first secondary coil and a voltage induced by the primary coil onto the second secondary coil during a frequency period of the alternating current signal, Fourier Transform components by multiplying the voltage induced by the primary coil onto the first secondary coil by a first predetermined value and storing the results in a first accumulator, multiplying the voltage induced by the primary coil onto the first secondary coil by a second predetermined value and storing the results in a second accumulator, multiplying the voltage induced by the primary coil onto the second secondary coil by the first predetermined value and storing the results in a third accumulator, and multiplying the voltage induced by the primary coil onto the second secondary coil by the second predetermined value and storing the results in a fourth accumulator, the first predetermined value and the second predetermined value being unique to each frequency period of the sine wave signal, and determining, when a predetermined number of samples have been calculated, a sum of the values of the first buffer, a sum of the values of the second buffer, a sum of the values of the third buffer and a sum of the values of the fourth buffer, and determining the magnitude of the first secondary coil signal by calculating the square root of the sum of the squares of the first and second accumulators and storing the results in a first magnitude buffer, determining the magnitude of the second secondary coil signal by calculating the square root of the sum of the squares of the third and fourth accumulators and storing the results in a second magnitude buffer, and determining the position of the movable device based upon determined magnitude of the first secondary coil signal and the magnitude of the second secondary coil signal.

In another embodiment, for example, a method for determining a position of a moveable device is provided. The method may include, but is not limited to, generating, by an digital to analog converter, a sine wave signal having a predetermined frequency and a predetermined amplitude, outputting, by the digital to analog converter, the generated sine wav signal to a primary coil of a variable displacement transformer, the variable displacement transformer comprising a shaft mechanically coupled to the movable device, outputting, by a first secondary coil of the variable displacement transformer, a voltage induced by the primary coil on the first secondary coil to a processor, outputting, by a second secondary coil of the variable displacement transformer, a voltage induced by the primary coil on the second secondary coil to a processor, calculating, by the processor, for each sample corresponding to a voltage induced by the primary coil onto the first secondary coil and a voltage induced by the primary coil onto the second secondary coil during a frequency period of the alternating current signal, Fourier Transform components by multiplying the voltage induced by the primary coil onto the first secondary coil by a first predetermined value and storing the results in a first accumulator, multiplying the voltage induced by the primary coil onto the first secondary coil by a second predetermined value and storing the results in a second accumulator, multiplying the voltage induced by the primary coil onto the second secondary coil by the first predetermined value and storing the results in a third accumulator, and multiplying the voltage induced by the primary coil onto the second secondary coil by the second predetermined value and storing the results in a fourth accumulator, the first predetermined value and the second predetermined value being unique to each frequency period of the sine wave signal, and determining, when a predetermined number of samples have been calculated, a sum of the values of the first buffer, a sum of the values of the second buffer, a sum of the values of the third buffer and a sum of the values of the fourth buffer, and determining, by the processor, the magnitude of the first secondary coil signal by calculating the square root of the sum of the squares of the first and second accumulators and storing the results in a first magnitude buffer, determining, by the processor, the magnitude of the second secondary coil signal by calculating the square root of the sum of the squares of the third and fourth accumulators and storing the results in a second magnitude buffer, and determining, by the processor, the position of the movable device based upon determined magnitude of the first secondary coil signal and the magnitude of the second secondary coil signal

BRIEF DESCRIPTION OF THE DRAWINGS

The detailed description will hereinafter be described in conjunction with the following drawing figures, wherein like numerals denote like elements, and wherein:

FIG. 1 illustrates a system for determining a position of a moveable device, in accordance with an embodiment;
FIG. 2 is a block diagram illustrating yet another system for determining a position of a moveable device, in accordance with an embodiment;
FIG. 3 is a flow chart illustrating an exemplary method for operating a system, in accordance with an embodiment;
FIG. 4 illustrates an example of the shape of the bandpass attenuation of a DFT calculated by correlation;
FIG. 5 is a flow diagram illustrating an exemplary method for compensating the position determined by the method illustrated in FIG. 3; and
FIG. 6 is a flow diagram illustrating a method for compensating the system 100 for vibration.

DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

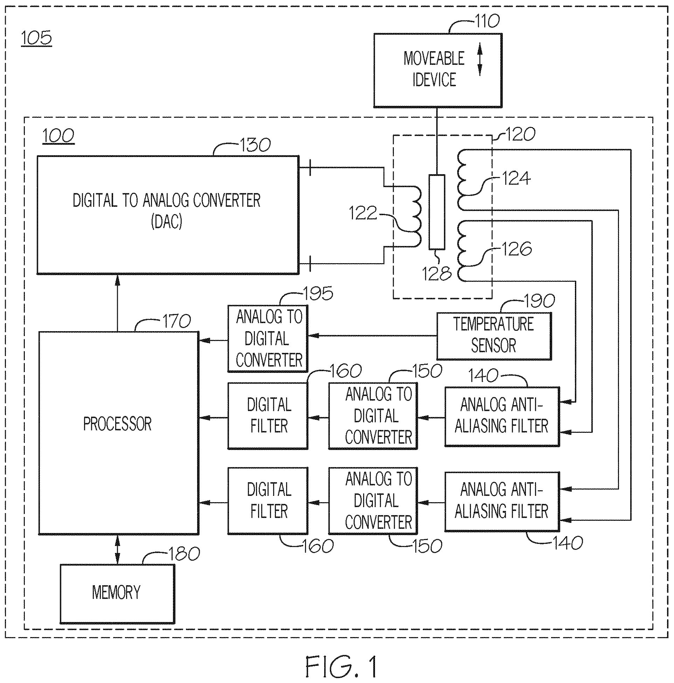

FIG. 1 illustrates a system 100 for determining a position of a moveable device 110, in accordance with an embodiment. The system 100 may integrated within or added to another system. The other system 105 may be, for example, a vehicle such as an aircraft, a spacecraft, an automobile, a watercraft, or the like. In other embodiments, the other system 105 an industrial system such as a factory, a refinery, or any other industrial, commercial or residential system where knowledge of a position of a part is needed.

The moveable device 110 may be any component of a vehicle, industrial, commercial or residential system which moves. In an aircraft, for example, the moveable device 110 may be any of various control surfaces such as a flap, an aileron, a rudder, a flaperon, a valve, any of various pilot inceptors including a control stick, a trim wheel, a rudder pedal and a steering yoke, any of various engine controls including a bleed valve, a thrust reverser and an inlet control vane, or the like.

The system 100 further includes a variable displacement transformer (VDT) 120. The VDT 120 may be a linear variable displacement transformer (LVDT) or a rotary variable displacement transformer (RVDT), depending upon whether the moveable device 110 uses linear motion or rotary motion. The VDT 120 converts a position of the moveable device 110 into a proportional electrical signal containing a polarity, which indicates a direction relative to a zero reference, and an amplitude representative of a distance from the zero reference.

In one embodiment, for example, the VDT 120 may include a primary coil 122. The primary coil 122 receives an input an alternating current (AC) signal from a Digital to Analog Converter (DAC) 130, as discussed in further detail below. The VDT 120 may further include two secondary coils 124 and 126 and a shaft 128. The shaft 128 is mechanically coupled to the movable device 110 in a manner that enables the VDT to accurately determine the position of the moveable device. The shaft 128 is positioned between the coils 122, 124 and 126. When the moveable device 110 is moved, the shaft 128 moves a corresponding amount, either rotationally in the case of a RVDT or linearly in the case of a LVDT. When the primary coil 122 receives the input AC signal from the DAC 130, the primary coil 122 induces an AC sine wave current on the secondary coils 124 and 126 proportional to the position of the shaft 128. Accordingly, the secondary coils 124 and 126 output an AC sine wave voltage which can accurately be converted into a position of the moveable device 110, as discussed in further detail below.

The DAC 130 may be composed of an analog filter that allows a digital version of the sine wave signal to be generated within the processor. There are several methods for generating a sine wave signal digitally. Two advantageous ways to generate the sine wave signal in the processor include pulse width modulation and pulse density modulation. In pulse width modulation the amplitude of the resulting analog signal is determined by the duty cycle of the digital signal into the analog filter. In pulse density modulation the periods of the digital pulse are fixed and the amplitude is determined by the quantity of the 'logic one' outputs versus the quantity of the 'logic zero' outputs. Because the fundamental frequency used in pulse density modulation can be higher than for a pulse width signal for a given processor clock and analog filer combination, pulse density modulation can produce a higher fidelity analog sine wave signal. In both modulation schemes, the serial stream of bits used for the signal generation can be calculated prior to circuit operation and stored in memory 180. The system 100, however, does not require either of these sine wave generation methods, and can work with other methods of providing a sine wave generation to the VDT sensor 120.

Each secondary coil 124 and 126 is coupled to an anti-aliasing filter 140. The anti-aliasing filters 140 prevent unwanted electrical noise from causing aliasing errors in the conversion of the signal data into position information. These anti-aliasing filters can be any of a number of filter types including passive filters built with combinations of resistors capacitors and inductors or a subset of these, active filters built with a combination of the passive elements previously mentioned and amplifiers. Anti-aliasing filters are typically low pass filters because the aliasing threats to the signal conditioning are typically higher that the signals of interest. The anti-aliasing filters 140 can also be bandpass or band rejection filters when the threats are such that these filters remove the unwanted aliasing frequency components.

The anti-aliasing filters 140 are coupled to the analog to digital converters (ADCs) 150. In one embodiment, for example, the ADCs 150 may be delta-sigma, ADCs which are well suited to the signal processing because they provide a good combination of DC accuracies and high resolution. Another benefit of delta-sigma ADCs is that the serial stream of conversion data from the modulator front end allows for efficient, high order, digital low pass filter implementations. In one embodiment, for example, the delta-sigma, analog to digital converters may include a digital low pass filter 160 included on the same device. The digital filters 160 can provide very effective aliasing noise rejection because the transition from the pass band to the rejection band is typically very steep with rejection levels of 100 decibels (dB) or more and with band transitions of hundreds of dB per decade of frequency change. The phase performance of the digital filters is typically very linear and predictable due to the digital nature of the calculations. However, in other embodiments, separate digital filters 160 may be coupled to the output of the ADCs 150.

As seen in FIG. 1, the outputs of the digital filters 160 are coupled to the one or more processors 170. The processor(s) 170 may be one or more field programmable gate arrays, digital signal processors (DSPs), applications specific integrated circuits (ASICs), microprocessors, central processing units (CPUs), or the like, or any combination thereof. In the embodiment illustrated in FIG. 1, a single processor 170, such as a FPGA, is configured to perform the positional analysis from both data paths (i.e., the voltage output by each secondary coil 124 and 126 through the analog-to-digital converters 150). However, any number of processors 170 may be utilized in the system 100. In one embodiment, for example, the processor(s) 170 may be dedicated to the system 100. However, in other embodiments, the processor(s) could be shared by other systems (e.g., another system in an aircraft or the like). While any number of processors 170 could be utilized in the system, the processor(s) 170 will hereinafter simply be referred to as the singular processor 170.

The processor 170 determines the position of the movable device 110 by processing the data output from the ADCs 150, and filtered by the digital filters 160 as discussed in further detail below. In one embodiment, for example, the processor may also control a frequency of ADCs 150 conversions and/or the number of ADC 150 conversions to use for each discrete Fourier transform (DFT) calculated in the processor 170 and/or the frequency of the DAC 130 to modify DFT transfer characteristics or to modify a signal-to-noise ratio, as discussed in further detail below. In the embodiment illustrated in FIG. 1, a single processor 170, such as an FPGA, is provided to processes the data from the data paths and to control the DAC 130. However, in other embodiments a separate processor 170 could be used to process the data output from the VDT 120 and a separate processor 170 may be used to control the ADCs 150 conversions and/or the DAC 130.

The system 100 may further include a memory 180 communicatively coupled to the processor 170. The memory may 180 store non-transitory computer readable instructions for implementing the system 100 as discussed in further detail below. The memory 180 may also be used to store pre-calculated data and/or operate as an accumulator as discussed in further detail below.

VDT sensors, such as the VDT 120, are typically made using various metals including ferrites, copper and stainless steel. Metals have significant thermal coefficients of expansion (TCEs). The TCEs of the various metals frequently do not match, which results in variations in the mechanical alignments of the moving parts of the VDT 120. Due to this phenomena, the performance of the VDT 120 as a position measurement device is compromised. Instead of having a linear relationship between the displacement of the shaft and the ratio of the secondary winding voltages, a more complex relationship results over temperature variations. To compensate for this phenomena, the system 100 further includes a temperature sensor 190 mounted on the VDT 120 and an analog to digital converter 195 coupled to the output of the temperature sensor 190. The temperature of the VDT 120 is measured by the temperature sensor 190. The Temperature sensor 190 could be of various types including a platinum resistance temperature device (RTD), a thermocouple, or a thermistor, or the like. The VDT sensor 120 behavior as a function of temperature can be determined prior to installation by careful measurements.

These measurements provide a characterization of a given VDT 120 that allows a more accurate position measurement to be made when the deviations due to temperature are used to adjust the results of the position calculation based on VDT temperature and the characterization stored in the memory 180.

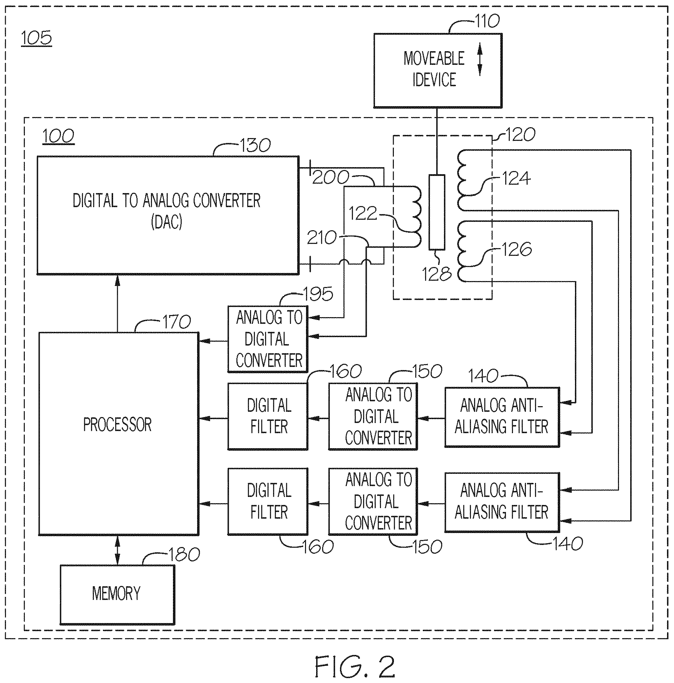

FIG. 2 is a block diagram illustrating yet another system 100 for determining a position of a moveable device 110, in accordance with an embodiment. In the embodiment illustrated in FIG. 2, the system 100 is identical to the system 100 illustrated in FIG. 1, however, the system 100 is configured to determine the temperature of the VDT 120 without the addition of a separate temperature sensor. In this embodiment, the temperature of the VDT 120 is determined by the processor 170 by causing the DAC 130 to apply a DC current such as a predetermined pulse width modulation or pulse density modulation, to the primary winding 122 of the VDT 120. Each end of the primary winding 122 of the VDT 120 is coupled to the ADC 195 via electrical connections 200 and 210. Each signal from electrical connections 200 and 210 is converted to a digital signal by the ADC 195 and output to the processor 170. The processor 170 then determines the resulting voltage across the primary windings 122 of the VDT 120 by comparing the resulting signals. In this method, the resistance of the primary winding 122 can provide a temperature measurement of the VDT 120 because the primary winding is made of metal, typically copper and the resistance of copper is a function of temperature. Measuring the DC voltage induced in the primary winding due to the precision DC current applied enables an Ohm's law calculation within the processor 170 that determines the resistance of the primary winding. The resistance measured provides for a temperature measurement by means of an equation or a look-up table in memory 180. The primary winding of the VDT 120 serves as an intrinsic resistance temperature detector (RTD) sensor for the purposes of VDT temperature measurement, which allows for the elimination of the temperature sensor 190 from the system, which saves cost and improves reliability of the system.

Because the modulation of the sine wave signal and the demodulation of the sensor signals are done in the same processor 170 using the same clock source for both, there is no opportunity for frequency or phase drift between the these components which provides for greater accuracy.

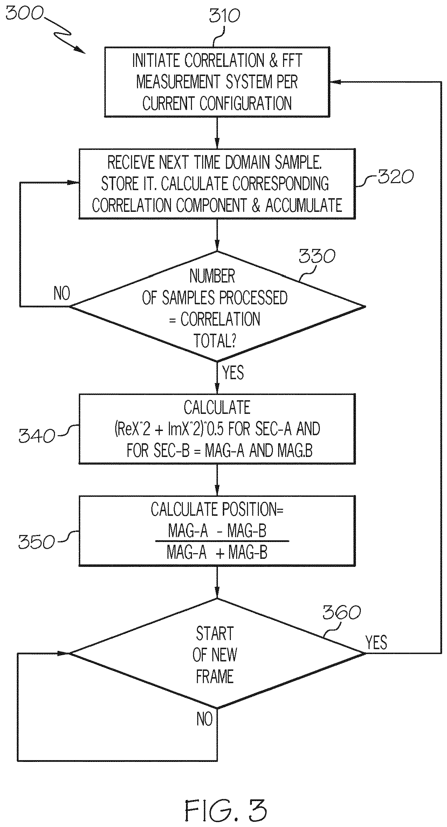

FIG. 3 is a flow chart illustrating an exemplary method 300 for operating a system 100, in accordance with an embodiment. The system 100 is first initiated. (Step 310). In other words, the components of the system 100 are started and configured to begin the generation of positional data. As discussed above, the DAC 130 outputs a sine wave signal having a fixed frequency to the primary coil 122 of the VDT 120. Upon initiation, the VDT 120 output signals from the coils 124, 126 are passed through the analog anti-aliasing filters 140, the ADCs 150 and the digital filters 160 as discussed above. The filtered digital representation of the voltage output by the VDT 120 is then received at the processor 170. As discussed in further detail below, the data generated by the VDT 120 may be used to calculate a correlation DFT as well as a fast Fourier transform (FFT).

Upon receiving the signal corresponding to a sample of the VDT 120, the processor 170 then calculates the DFT for the sample by correlation, using the data received from the ADCs 150 and digital filters 160 and stores time samples and the DFT results in the memory 180. (Step 320). The data output from the ADCs 150 and the digital filters 160 is a set of sequential time domain data that is input to the processor 170. The data contains frequency and amplitude information about the position of the movable device 110 over the period of time when the signals from 124 and 126 were sampled. The DFT converts the data received from the digital filter 160, from the time domain into the frequency domain. The correlation method of performing the DFT reduces the amount of math to be performed by the processor 170 when the magnitude of signals is desired for only one frequency when compare to the other methods of calculating a DFT, which necessarily requires calculations for multiple frequency components.

In one embodiment, for example, the processor 170 may use Equation 1 to perform the DFT by correlation.

$$ReX[k] = \sum_{i=0}^{N-1} x[i] \cos\left(\frac{2\pi ki}{N}\right)$$

$$ImX[k] = - \sum_{i=0}^{N-1} x[i] \sin\left(\frac{2\pi ki}{N}\right)$$

Equation 1

ReX[k] and ImX[k] are the two dimensional, rectangular, vector components of the magnitude of the secondary signals from the secondary coils 124 and 126. In the correlation method of calculating the DFT, "i" is effectively incremented through N values to determine the ReX and ImX vector components of each secondary coil's voltage magnitude. The 'k' in the equation is chosen to align with the frequency of excitation of the VDT; the frequency of the DAC 130. The value of x[i] corresponds to the digitized voltage level input to the processor 170 from the ADCs 150 and digital filters 160 at each sampled point in time i. The value of N corresponds to the number of samples in the correlation DFT calculation. N may be selected to be any integer value only when the for the correlation DFT calculation. N may be selected such that N times the sample interval is equal to an integer multiple of the number of the sensor sine wave cycles received from the secondary coils 124 and 126 for the correlation method. Therefore, the processor 170 may select N based upon an optimal frequency for the sensor 120 and for the ADC 150 and for the filters 140 and 160. For example, it may be determined that the best frequency to operate the VDT sensor has been determined to be 1800 Hz for reasons other than the DFT calculation such as optimal sensor operation and system timing constraints. Additionally, in this example, the optimal rate at which the ADC 150 operates may be determined to be 126,000 data samples per second, again for reasons other than the DFT calculations such as for rejecting aliasing threats. In this example appropriate values of N would be 70, 140, 210, 280 or even 2870, because these values of N divided by the sample data rate equals an integer number of 1800 Hz sine wave periods. As discussed in further detail below, when the FFT method of calculating the DFT is used, N must be chosen to be an integer power of two such as 32, 64, 128 or 256.

One benefit of the method 300 is that the method 300 does not require that N be an integer power of two to perform the DFT by correlation. In contrast, typical full Fourier transform calculations require the number of samples N to be an integer power of two. For the example above, the optimal sampling rate determined to be 126,000 data samples per second and the sensor frequency of 1800 Hz sine wave, does not result in a value of N that equals an integer power of two. Either the Sine wave frequency needs to change or the sample rate would need to change to satisfy the 'integer power of two' requirement, which would cause the implementation to use less optimal settings for the sensor and the analog to digital converter. By allowing N to be any integer value, the precision of the position determined by the system 100 and the overall performance of the system 100 can be optimized. In other words, rather than requiring the operations of the sensor 120 and the analog to digital converter 150 to be less than optimal for non-Fourier transform calculation reasons, the correlation process is more accommodating than other DFT methods.

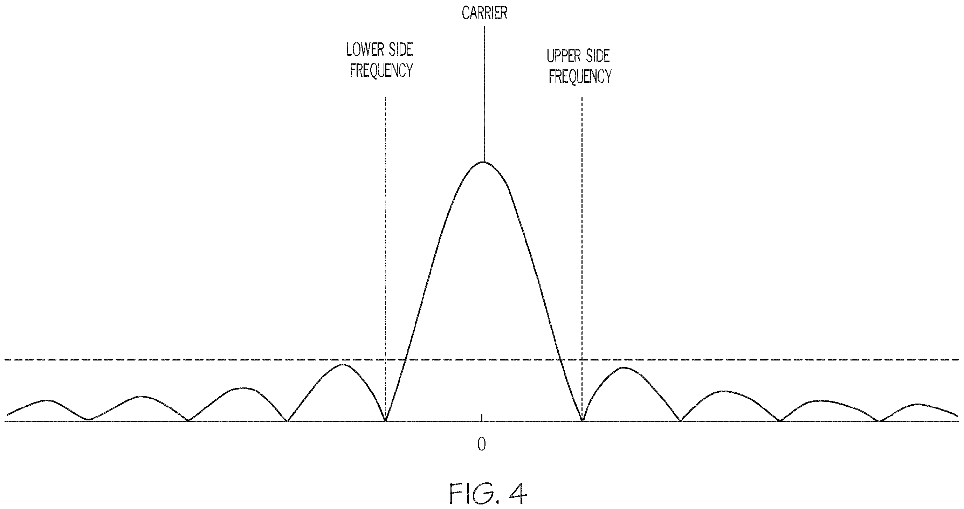

Another example of the benefit of the correlation method over the other methods of DFT calculation is demonstrated when one considers the DFT's ability to attenuate unwanted signals. FIG. 4 illustrates an example of the shape of the bandpass attenuation of a DFT calculated by correlation. As seen in FIG. 4, components with frequencies higher and lower than the carrier frequency are attenuated. When the VDT 120 experiences vibration at low frequencies, the VDT amplitude (what provides this amplitude?) modulates that vibrational motion into side band frequency components in the VDT secondary winding signals. FIG. 4 also shows a beneficial situation where the unwanted frequency components are attenuated substantially optimally. When the vibration in the VDT 120 occurs such that the side band frequencies occur at frequencies away from the notches the design would be less optimal, attenuating the unwanted components by a lesser amount. As discussed in further detail below, By using an FFT of a portion of the time samples in addition to the correlation calculation, the frequency and amplitude of the vibrations can be determined.

Yet another benefit of the method 300 is that the values of the cosine and sine function can be calculated in advance and stored in the memory 180, for example, in a look-up table, as they are fixed values. As seen above, $\cos\left(\frac{2\pi ki}{N}\right)$ and $\sin\left(\frac{2\pi ki}{N}\right)$ from the real and imaginary components of equation 1 are values which can be calculated in advance as each contain variables which are known in advance. When compared to the FFT method, the number of sine and cosine values that need to be generated and stored is significantly less in the correlation method, thereby requiring a less memory usage. Furthermore, unlike the FFT equations, the processor 170 can perform incremental data calculations as the samples from the analog to digital converter arrive, before having all of the data samples, which produces the result sooner, reducing latency. In other words, the processor 170 can multiply each received value x[i] by the respective pre-calculated cosine and sine values stored in the memory 180 and then accumulate the DFT results, ReX[k] and ImX[k], in two memory 180 locations. Because all of the sampled x[i] values are multiplied by the factors above and the results of the multiplications are accumulated immediately after each individual multiplication, the results are available one multiplication and one addition after the final x[i] is received by the processor 170.

The processor 170 continues to process the data from the VDT 120 and perform the DFT calculation by correlation described above until all of the N samples of the DFT have been calculated. (Step 330).

The processor 170 then calculates a magnitude of the real and imaginary components of the DFT by correlation for each of the secondary windings 124 and 126 of the VDT 120. (Step 340). In one embodiment, for example, the processor may calculate the magnitude according to Equation 2:

$$Mag_{winding} = \sqrt{(\text{ReX}[k]^2 + \text{ImX}[k]^2)}$$

Equation 2

The processor 170 may then determine the position of the moveable device 110 by performing the calculation described in Equation 3. (Step 350).

$$VDTposition = \frac{MagA - MagB}{MagA + Mag\,B}$$

Equation 3

Where MagA is the magnitude of the data from secondary winding 124 and MagB is the magnitude of the data from secondary winding 126 calculated in Step 340.

The calculated position of the moveable device is then used by the processor 170 or otherwise output to another relevant system which requires the position information.

In one embodiment, for example, the processor may immediately return to step 310 to initiate a next position determination. However, in another embodiment, for example, the processor may determine if a new frame has started. (Step 360). In this embodiment, the system 100 may utilize a a fixed update frame rate and then maintain that frame rate by only calculating the position of the moveable device 110 once per each frame. This is done for many practical reasons. One of the main reasons is that some system stability analysis is determined based on predictable update frame rates. Aircraft systems, for example, are dependent on multiple position sensors and other sensors. Another consideration in stability has to do with the latency of the data. Knowing when the samples are taken with respect to the other control calculations also aides in the stability of a system.

As discussed above, the VDT 120 may be made using various metals having different coefficients of expansion (TCEs). Because the components of the VDT 120 expand and contract at different temperatures, the mechanical alignments of the moving parts of the VDT 120 may be compromised.

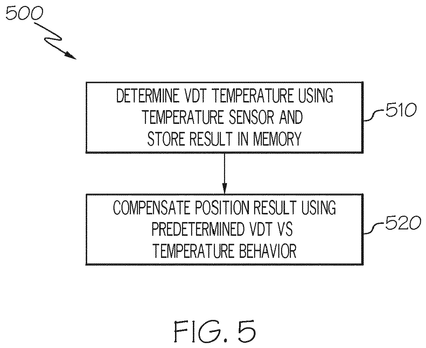

FIG. 5 is a flow diagram illustrating an exemplary method 500 for compensating the position determined in method 300 for temperature fluctuations. Accordingly, the processor 170, after determining the position of the moveable device 110 in Step 350, may determine the temperature of the VDT 120. (Step 510). As discussed above, a temperature sensor 190 may be coupled to the VDT 120 to sample a temperature of the VDT 120 as seen in FIG. 1. In another embodiment, illustrated in FIG. 2, a DC signal may be applied to the primary winding 122 of the VDT 120 by the processor 170 through the DAC 130. The processor 170, in this embodiment, may then determine the temperature of the device by measuring the voltage across the primary windings 122 of the VDT 120, as discussed above.

The processor 170 may then compensate the position calculated in Step 350 according to the determined temperature in Step 510. (Step 520). As discussed above, the behavior of the VDT 120 as a function of temperature can be determined prior to use by taking measurements of the VDT 120 at various temperatures. These measurements provide a temperature characterization of a given VDT 120 that allows a more accurate position measurement to be made. This temperature characterization can be stored in the memory 180. Accordingly, the processor 170 in Step 520 modifies the position of the moveable device 110 calculated in Step 350 by adjusting the position according to the temperature characterization of the VDT 120.

In one embodiment, for example, the processor 170 may modify the determined position of the moveable device via the method described in FIG. 5 each frame. In other words, the processor 170 may modify the position of the moveable device 110 determined in step 350 each time the position is calculated. However, in other embodiments, the processor 170 may perform the temperature compensation less frequently. For example, the processor 170 may perform the steps 510 and 520 periodically (e.g., once every 5 frames, 10 frames, 50 frame, 100 frames, etc.) or upon demand by a user of the system 100.

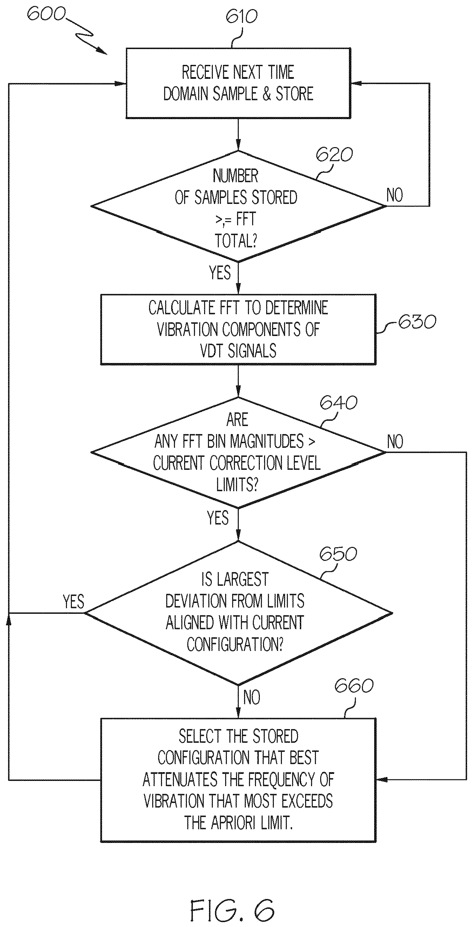

In one embodiment, for example, the processor 170 may also compensate the system 100 for vibration. FIG. 6 is a flow diagram illustrating a method for compensating the system 100 for vibration. In this embodiment, for example, the processor 170 may then continue to receive data from the VDT 120 from Step 320 until enough samples are received to perform a FFT on the data. (Steps 610 and 620). As discussed above, a FFT requires a number of samples which is a power of 2 (i.e., 32, 64, 128, 256, etc.). Accordingly, in this embodiment, the processor 170 may continue to receive data from the VDT 120 rather than stopping after step 330 until the number of samples received from the VDT 120 is the lowest power of 2 greater than the value of N from the DFT by correlation calculations of Step 320.

Once enough samples are received from the VDT 120, the processor 170 performs a FFT on the data. (Step 630). By performing a FFT of the data from the VDT 120 the processor 170 can detect a vibration of the VDT 120 and determine a frequency of the vibration which may be corrupting the position measurement. By transforming the time domain data output from the VDT 120 into a frequency domain utilizing a FFT calculation, the processor 170 can determine which one or more frequency bins of the FFT include a vibration component.

The processor 170 then determines if any FFT bin magnitudes are greater than current correction limits. (Step 640). In other words, the processor 170 determines if the magnitude of a frequency bin of the FFT calculation corresponding to a vibration frequency is greater than a current correction limit. In one embodiment, for example, a correction limit may be chosen to be, for example, 2% of the full scale amplitude of the position sensor.

When a magnitude of one or more frequency bins is greater than the current correction level limit, the processor 170 determines if the largest bin is aligned with the current configuration. (Step 650). In other words, the processor 170 determines if the number of samples N from step 330 alignes a notch of the correlation calculation with the largest bin. Adjusting N is tha easiest way to move the notches of greater attenuation. However, setting other than the number N can also be part of the configuration. For example, a frequency of sensor excitation could alternatively be modified to move the attenuation notches.

When the largest bin is not aligned with the current configuration (from Step 650) or when the magnitude of a bin is less than or equal to the current correction level limit (from Step 640), the processor 170 selects a configuration stored in the memory 180 that best attenuates the frequency of vibration of the largest bin from the FFT calculation of Step 630. (Step 660). In other words, the frequency and amplitude information of unwanted signal components determined by the FFT performed in the processor 170 can be used to select from a set of VDT and DFT configurations stored in the memory 180 to achieve an optimal filter. The configurations would include optional combinations of sine wage generator frequencies, the value N for the correlation DFT calculation and the frequency of ADC 150 conversions.

When the largest bin is aligned with the current configuration (from Step 650), or after selecting a stored configuration in Step 660 the processor 170 then returns to Step 610 to begin a next vibration correction determination and optimal configuration selection. In one embodiment, for example, the method 600 could be performed once per each frame of the correlation calculation of the method 300 as each aircraft or other vehicle housing the moveable device 110 is operating. As the correlation method allows for more choices for the value of N and for the number of samples used in each DFT calculation, the ability of the system to adapt to threat conditions is increased above that for DFT methods that use only correlation or only FFTs to determine the position of the moveable device 110. However, in other embodiments, for example, the method 600 could be performed periodically, upon request of a user of the system 100 or even just once for each aircraft type certificate.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

**Claims**

1. A system for determining a position of a moveable device, comprising:

    a variable displacement transformer, comprising:

        a shaft mechanically coupled to the moveable device;
        a primary coil arranged on a first side of the shaft;

a first secondary coil arranged on a second side of the shaft; and
a second secondary coil arranged on the second side of the shaft;

a digital to analog converter electrically connected to the primary coil of the variable displacement transformer, the digital to analog converter configured to provide a sine wave signal to the primary coil of the variable displacement transformer having a predetermined frequency and a predetermined amplitude; and
a processor electrically coupled to the first secondary coil and the second secondary coil, the processor configured to:

    calculate, for each sample corresponding to a voltage induced by the primary coil onto the first secondary coil and a voltage induced by the primary coil onto the second secondary coil during a frequency period of the alternating current signal, Fourier Transform components by:

        multiplying the voltage induced by the primary coil onto the first secondary coil by a first predetermined value and storing the results in a first accumulator;
        multiplying the voltage induced by the primary coil onto the first secondary coil by a second predetermined value and storing the results in a second accumulator;
        multiplying the voltage induced by the primary coil onto the second secondary coil by the first predetermined value and storing the results in a third accumulator; and
        multiplying the voltage induced by the primary coil onto the second secondary coil by the second predetermined value and storing the results in a fourth accumulator, the first predetermined value and the second predetermined value being unique to each frequency period of the sine wave signal; and

    determining, when a predetermined number of samples have been calculated, a sum of the values of the first buffer, a sum of the values of the second buffer, a sum of the values of the third buffer and a sum of the values of the fourth buffer; and
    determining the magnitude of the first secondary coil signal by calculating the square root of the sum of the squares of the first and second accumulators and storing the results in a first magnitude buffer;

determining the magnitude of the second secondary coil signal by calculating the square root of the sum of the squares of the third and fourth accumulators and storing the results in a second magnitude buffer; and

determining the position of the movable device based upon determined magnitude of the first secondary coil signal and the magnitude of the second secondary coil signal.

2. The system of claim 1, further comprising:

a first anti-aliasing filter coupled to an output of the first secondary coil; and a second anti-aliasing filter coupled to an output of the second secondary coil.

3. The system of claim 2, further comprising:

a first analog-to-digital converter coupled to an output of the first anti-aliasing filter, the first analog-to-digital converter outputting a digital representation of the voltage induced by the primary coil onto the first secondary coil to the processor; and a second analog-to-digital converter coupled to an output of the second anti-aliasing filter, the second analog-to-digital converter outputting a digital representation of the voltage induced by the primary coil onto the second secondary coil to the processor.

4. The system of claim 3, further comprising:

a first digital filter coupled to an output of the first analog-to-digital converter; and a second digital filter coupled to an output of the second analog-to-digital converter.

5. The system of claim 3, wherein the first analog-to-digital converter further comprises a first digital filter and the second analog-to-digital converter further comprises a second digital filter.

6. The system of claim 1, wherein the predetermined number of samples may be any integer value.

7. The system of claim 1, wherein the processor calculates the Fourier transform components as each sample is received.

8. The system of claim 1, further comprising:

a temperature sensor coupled to the variable displacement transformer, the temperature sensor configured to output a temperature of the variable displacement transformer to the processor,
wherein the processor is further configured to compensate the determined position of the movable device based upon the temperature of the variable displacement transformer.

9. The system of claim 1, further comprising:

an analog to digital converter communicatively coupled to the processor; a first electronic connection between a first side of the primary winding of the variable displacement transformer and the analog to digital converter; a second electronic connection between a second side of the primary winding of the variable displacement transformer and the analog to digital converter, wherein the processor is further configured to:

determine a temperature of the variable displacement transformer by:

outputting a DC signal to the primary winding of the variable displacement transformer; determine a voltage across the primary winding based upon the voltage at the first electrical connection and the second electrical connection; compensate the determined position of the movable device based upon the temperature of the variable displacement transformer; and determine the temperature of the variable displacement transformer based upon the voltage across the primary winding; and

compensate the determined position of the movable device based upon the temperature of the variable displacement transformer.

10. The system of claim 1, wherein the processor is further configured to modify the predetermined number of samples by:

performing a fast Fourier transform on a greater number of samples than the predetermined number of samples; determining vibration frequencies of the variable displacement transformer based upon the fast Fourier transform; and selecting the predetermined number of samples to attenuate the greatest determined vibration frequency.

FIG. 1

EP 3 279 613 A1

FIG. 2

EP 3 279 613 A1

300

310 INITIATE CORRELATION & FFT MEASUREMENT SYSTEM PER CURRENT CONFIGURATION

RECIEVE NEXT TIME DOMAIN SAMPLE. STORE IT. CALCULATE CORRESPONDING CORRELATION COMPONENT & ACCUMULATE 320

330 NUMBER OF SAMPLES PROCESSED = CORRELATION TOTAL?

NO

YES

340 CALCULATE (ReX^2 + ImX^2)^0.5 FOR SEC-A AND FOR SEC-B = MAG-A AND MAG.B

350 CALCULATE POSITION= $\dfrac{MAG\text{-}A \; - MAG\text{-}B}{MAG\text{-}A \; + MAG\text{-}B}$

360 START OF NEW FRAME

YES

NO

FIG. 3

FIG. 4

500

DETERMINE VDT TEMPERATURE USING
TEMPERATURE SENSOR AND
STORE RESULT IN MEMORY
510

COMPENSATE POSITION RESULT USING
PREDETERMINED VDT VS
TEMPERATURE BEHAVIOR
520

FIG. 5

*600*

*610*

RECEIVE NEXT TIME
DOMAIN SAMPLE & STORE

*620*

NUMBER
OF SAMPLES STORED
>,= FFT
TOTAL?

NO

YES

CALCULATE FFT TO DETERMINE
VIBRATION COMPONENTS OF
VDT SIGNALS

*630*

*640*

ARE
ANY FFT BIN MAGNITUDES >
CURRENT CORRECTION LEVEL
LIMITS?

NO

YES

*650*

IS LARGEST
DEVIATION FROM LIMITS
ALIGNED WITH CURRENT
CONFIGURATION?

YES

NO

*660*

SELECT THE STORED
CONFIGURATION THAT BEST
ATTENUATES THE FREQUENCY OF
VIBRATION THAT MOST EXCEEDS
THE APRIORI LIMIT.

FIG. 6

Europäisches
Patentamt

European
Patent Office

Office européen
des brevets

## EUROPEAN SEARCH REPORT

Application Number

EP 17 18 1323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 248 994 B1 (STOLAN JOHN A [US]) 24 July 2007 (2007-07-24) * column 3, line 66 - column 8, line 3; figures 1-9 * | 1-10 | INV. G01D5/22 G01D5/244 |
| A | US 2005/283330 A1 (LARAIA JOSE M [US] ET AL) 22 December 2005 (2005-12-22) * page 4, paragraph 60 - page 4, paragraph 63 * * page 7, paragraph 97 - page 8, paragraph 100; figure 1 * | 1-10 | |
| A | JP 2008 139100 A (HITACHI LTD; HITACHI INF & CONTROL SYST) 19 June 2008 (2008-06-19) * the whole document * | 1-10 | |
| A | WO 93/20409 A1 (MICRO EPSILON MESSTECHNIK [DE]; MANDL ROLAND [DE]; BAUMANN HEINRICH [D) 14 October 1993 (1993-10-14) * the whole document * | 1-10 | |

TECHNICAL FIELDS
SEARCHED (IPC)

G01D

The present search report has been drawn up for all claims

| Place of search | Date of completion of the search | Examiner |
|---|---|---|
| Munich | 4 December 2017 | Lyons, Christopher |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 18 1323

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2017

| Patent document cited in search report | | | Publication date | Patent family member(s) | | | Publication date |
|---|---|---|---|---|---|---|---|
| US 7248994 | B1 | | 24-07-2007 | NONE | | | |
| US 2005283330 | A1 | | 22-12-2005 | CN | 1934412 | A | 21-03-2007 |
| | | | | EP | 1756518 | A2 | 28-02-2007 |
| | | | | JP | 4599393 | B2 | 15-12-2010 |
| | | | | JP | 2007525673 | A | 06-09-2007 |
| | | | | KR | 20070064549 | A | 21-06-2007 |
| | | | | US | 2005283330 | A1 | 22-12-2005 |
| | | | | WO | 2006009608 | A2 | 26-01-2006 |
| JP 2008139100 | A | | 19-06-2008 | JP | 4713450 | B2 | 29-06-2011 |
| | | | | JP | 2008139100 | A | 19-06-2008 |
| WO 9320409 | A1 | | 14-10-1993 | EP | 0587844 | A1 | 23-03-1994 |
| | | | | US | 5477473 | A | 19-12-1995 |
| | | | | WO | 9320409 | A1 | 14-10-1993 |

EPO FORM P0459

For more details about this annex : see Official Journal of the European Patent Office, No. 12/82